# EUROPEAN PATENT SPECIFICATION

(11) **EP 4 325 319 B1**
(45) Date of publication and mention of the grant of the patent: **28.01.2026**
(21) Application number: 22190812.2
(22) Date of filing: 17.08.2022
(51) Int. Cl.: G05D 1/242, G05D 1/622, G05D 105/05, G05D 107/70, G05D 109/10, G05D 111/10

(54) **OBSTACLE AVOIDANCE TRAJECTORY FOR A MINING VEHICLE**
ROUTENANPASSUNG FÜR BERGBAUFAHRZEUG
CONTOURNEMENT D'OBSTACLE POUR VÉHICULE MINIER

(43) Date of publication of application: 21.02.2024
(73) Proprietor: Sandvik Mining and Construction Oy, 33330 Tampere (FI)
(72) Inventor: PUURA, Jussi, 33311 Tampere (FI); von ESSEN, Tomi, 33311 Tampere (FI); HYYPPÄ, Samuel, 33311 Tampere (FI); LIIKANEN, Henri, 33311 Tampere (FI)
(74) Representative: Sandvik

(56) References cited:
- WO-A1-2004/086084
- US-A- 6 064 926
- US-A1- 2009 088 979
- US-A1- 2020 201 341

## Description

### FIELD

The present invention relates to route adaptation for mining vehicles for underground worksites.

### BACKGROUND

Mining or construction excavation worksites, such as underground hard rock or soft rock mines, may comprise areas for automated operation of mining vehicles, such as load and/or haul machines and drilling rigs. Such mining vehicles may comprise an unmanned vehicle, for example, remotely controlled from a control room, or a manned vehicle, such as a vehicle operated by an operator in a cabin of the vehicle.

Mining vehicles may be configured to perform at least some tasks autonomously. An automated mining vehicle operating in an automatic mode may be configured to operate independently, but may be taken under external control at certain operation areas or conditions, such as during states of emergencies.

A route from a starting point to an end point may be beforehand planned for autonomous driving. In some systems, an experienced operator may teach an optimal path by driving the vehicle, or the route may be designed at least partially automatically on the basis of input parameters and a worksite model. Conditions in an underground worksite may change during mining operations, and affect drivability along the route. For example, a loose rock may cause stopping of an autonomous mining vehicle, and require manual control by an operator. Such production interruptions negatively affect mining operations efficiency at the worksite.

US6064926 discloses a method and apparatus for planning an alternate path in response to detection of an obstacle by a mobile machine at a work site. The work site includes a fleet of mobile machines and a fleet manager. The method includes the steps of determining the presence and location of an obstacle in a primary path of the mobile machine, determining an alternate path around the obstacle, and delivering a signal to the fleet manager with the location of the obstacle and the alternate path.

According to a first aspect, there is provided an apparatus as defined in claim 1.

According to a second aspect, there is provided a method as defined in claim 9.

According to a third aspect, there is provided an apparatus comprising at least one processor, at least one memory including computer program code, the at least one memory and the computer program code being configured to, with the at least one processor, cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of a mining vehicle;
FIGURE 2 illustrates a method in accordance with some embodiments;
FIGURE 3 illustrates functions of a control unit in accordance with some embodiments;
FIGURES 4a and 4b illustrate top view examples of a mining vehicle performing a driving task;
FIGURE 5 illustrates a floor model generation procedure; and
FIGURE 6 illustrates an example apparatus capable of supporting at least some embodiments.

### EMBODIMENTS

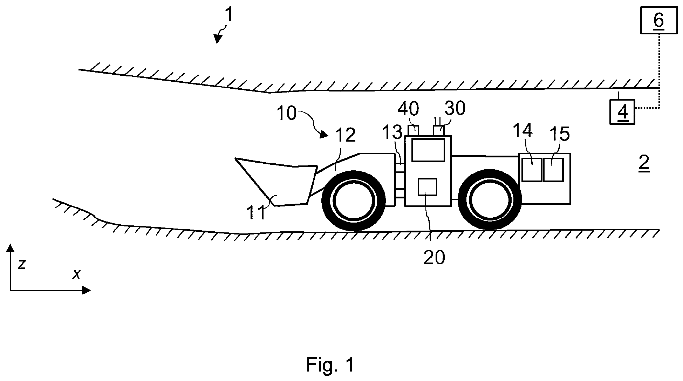

Figure 1 illustrates a simplified example of a portion of a mining worksite 1, in the present example comprising an underground tunnel portion or tunnel 2. The mining worksite may comprise an ore mine or a construction site, such as a railway or road tunnel site. However, it will be appreciated that a worksite may comprise also on-surface areas. The term underground mining vehicle herein refers generally to mobile work machines suitable to be used at least in operation of different kinds of underground mining or construction excavation worksites, such as lorries, dozers, dumpers, vans, mobile rock drilling or milling rigs, mobile reinforcement machines, and bucket loaders or other kind of mobile work machines which may be used in different kinds of excavation worksites.

The mining vehicle 10 is in the present example a loader or a load and haul (LHD) vehicle comprising a bucket 11 connected to a boom 12. The vehicle 10 may be, for example, an articulated vehicle comprising two sections connected by a joint 13. However, it will be appreciated that application of the presently disclosed features are not limited to any particular type of vehicle which may be used at excavation worksites. Some other examples of such a vehicle include inspection vehicles, autonomous inspection vehicles (AIVs), lorries, dumpers, vans, mobile rock drilling or milling rigs, or mobile reinforcement machines.

In the example of Figure 1, the vehicle 10 comprises a system 14 of pumps for generating hydraulic pressure for operating various parts of the machine, such as lifting the boom 12, tuming the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box. The drivetrain of the vehicle 10 may comprise, for example, motor 15, the crank shaft, and/or a transmission.

The vehicle 10 comprises at least one control unit 20 configured to control at least some functions and/or actuators of the vehicle. The control unit 20 may comprise one or more computing units/processors executing computer program code stored in memory. The control unit 20 may be connected to one or more other control units of a control system of the vehicle, for example, by a controller area network (CAN) bus. The control unit 20 may comprise or be connected to a user interface (UI) with a display device as well as an operator input interface. Such interfaces are usable for receiving operator commands and information to the control unit. It is to be appreciated that the control unit 20 may be configured to perform at least some of the below illustrated features, or a plurality of control units or controllers may be applied to perform these features. It is to be appreciated that at least some of the control functionality may be implemented even outside the vehicle, for example, at a worksite management system.

The vehicle 10 may comprise a wireless communication device 30, by which the control unit 20 and/or another unit of a control system of the vehicle 10 may be configured to establish a data connection. The data connection comprises at least one of: data reception, and/or data transmission. The data connection may be formed between the control system of the vehicle and at least one control device of a (mining operations) control system 6 external to the vehicle. The data connection may utilize a wireless connection provided by a base station or access node 4. The communication device 30 may thus be operatively connected to a communications system of the worksite, such as a wireless access system comprising a wireless local area network (WLAN) and/or a cellular communications network such as a 4G, 5G or some other generation cellular network.

The control system 6 may comprise or be connected to further network(s) and/or data processing system(s), such as a worksite management system, a cloud service, a data analytics system, an intermediate communications network, such as the internet, etc. The control system 6 may comprise or be connected to further device(s) or control unit(s), such as a handheld user unit, a vehicle unit, a worksite management device/system, a remote control and/or monitoring device, data analytics device, sensor system/device, etc.

The vehicle 10 may be unmanned. An unmanned vehicle may comprise a user interface to allow a user to control any of the functions of the vehicle, for example, steering. The vehicle may comprise an operator input interface in addition to the user interface or as an alternative to the user interface. Said interfaces of the vehicle may be located in a remote location from the vehicle and the vehicle may be remotely controlled. Examples of remote control include: control by an operator in the tunnel, or control by an apparatus within a control room at the worksite, or even control by an apparatus from a long distance away from the worksite via communications network(s). The vehicle 10 may be an automated vehicle, which in an autonomous operating or driving mode may operate/drive independently without requiring continuous user control. Such an automated vehicle may be taken under external control, for example, during states of emergencies. When the vehicle is in a manual driving mode, an operator drives the vehicle manually, by remote control or locally at the vehicle by operator controls. The operator may set the vehicle into a (default) automatic driving mode in which the vehicle is configured to automatically drive a specified route, for example, between a loading point and a dump shaft.

Apparatuses of the worksite, such as the control device(s) of the control system 6 and the mining vehicle 10, may be configured to store and use at least one worksite model representing current state and/or target state of the worksite environment. The worksite model may be an environment model or a map. The worksite model may be a two-dimensional (2D) model or a three-dimensional (3D) model indicative of surface profiles and obstacles at the worksite, at an area operated by mining vehicles, for example. In the case of an underground worksite, the worksite model may be a tunnel model indicative of tunnel profiles.

In some embodiments, the control system 6 and/or the mining vehicle 10 is configured to store a 3D (tunnel) model of the underground worksite, illustrating floors, walls, and ceilings of the tunnel network. The 3D model may comprise or be formed based on point cloud data generated on the basis of the scanning. In some other embodiments, the 3D model may be stored in some other format, such as a mesh model comprising vertices, edges and faces. In some embodiments, the 3D model may be a design model or may be generated on the basis of a design model, such as a CAD model, created by a mine designing software or a 3D model created on the basis of tunnel lines and profiles designed in a drill and blast design software.

The vehicle 10 may comprise one or more scanning units, or scanners 40, configured to perform scanning of environment around the vehicle. In some embodiments, the scanning results are applied to detect the position and orientation of the vehicle and one or more further elements thereof, such as the position and orientation of the scanner 40, or the bucket 11.

The control unit 20 may be configured to compare scanned tunnel profile data to reference profile data stored in the worksite model. The control unit 20 may be configured to position the mining vehicle on the basis of finding a match in a surface profile indicated by the scanning data and surface profile indicated by the worksite model. The control unit 20 may be configured to correct positioning by dead-reckoning based on scanning based positioning. In some embodiments, the scanning results are applied to detect position and orientation of the mining vehicle and one or more further elements thereof, such as a position of the scanner 40 or the bucket 11.

In an embodiment, the scanner 40 is a 2D scanner configured to monitor tunnel walls at desired height, for example. The mining vehicle 10 may be configured to apply a 2D worksite model, for monitoring position of the mining vehicle based on environment scanning by a 2D scanner comprised by the mining vehicle. In another embodiment, the scanner 40 is a 3D scanner, such as a light detection and ranging (LIDAR) device, configured to generate 3D scanning data or point cloud data.

A driving plan, or a route plan, may define a route to be driven by the vehicle 10 and may be used as an input for an automatic driving control of the vehicle. Further, such a plan may be used as a part of a task or planned task. When the task comprises a route plan, the plan may form the route to be travelled during the task. The plan may be generated offline and off-site, for example, in an office. The plan may be generated on-board the vehicle, for example, by a teaching drive. The plan may define a start point, an end point, and a set of route points for the automatic drive. If a new obstacle appears at the route after definition of the route plan, the autonomously driving mining vehicle may need to stop. After stopping, the route needs to be redefined, for example, based on input from an operator remotely monitoring the fleet of mining vehicles by the control system 6.

There are now provided improvements to facilitate dynamic mining vehicle route adaptation during execution of an autonomous driving task.

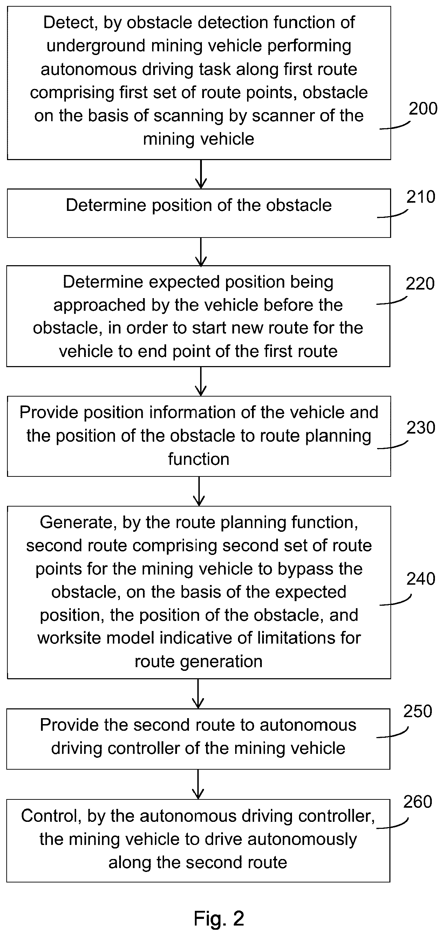

Figure 2 illustrates a method for controlling a mining vehicle and autonomous driving of a mining vehicle according to some embodiments. The method may be performed by an apparatus, in some embodiments a control apparatus configured to control a mining vehicle, and autonomous driving related operations thereof. The method may be performed by a mining vehicle and a controlling apparatus thereof, such as the mining vehicle 10, and by the control unit 20 thereof, respectively. The method may be a computer-implemented method.

Block 200 comprises detecting, by an obstacle detection function (ODF) of an underground mining vehicle performing an autonomous driving task along a first route comprising a first set of route points, an obstacle on the basis of scanning by a scanner of the mining vehicle.

Block 210 comprises determining a position of the obstacle.

Block 220 comprises determining, in response to detecting the obstacle, an expected position being approached by the vehicle before the obstacle, in order to start a new route for the vehicle to an end point of the first route. The expected position may thus serve as a starting point for the new route to be generated to avoid the obstacle.

Block 230 comprises providing the expected position being approached by the vehicle and the position of the obstacle to a route planning function (RPF).For example, the control unit or a function thereof may be configured to send position information of the obstacle received from the ODF and the determined expected position to the RPF in block 230.

Block 240 comprises generating, by the RPF, a second route comprising a second set of route points. The second set of route points is generated for the mining vehicle to bypass the obstacle, on the basis of the expected position being approached by the vehicle, the position of the obstacle, and a worksite model indicative of limitations for route generation. The information provided in block 230 may thus serve as input parameters for generating the second route. The expected position may thus serve as a starting point for the second route requested in block 230 from the RPF to avoid the obstacle.

Block 250 comprises providing the second route to an autonomous driving controller (ADC) of the mining vehicle. For example, the RPF may be configured to send information of at least positions of the route points of the second route to the ADC.

Block 260 comprises the ADC controlling the mining vehicle to drive autonomously along the second route.

A route point may generally refer to information comprising at least position information to control autonomous driving of the vehicle. For example, a route point may define x and y coordinates of a middle point between tunnel walls (or between the obstacle and a tunnel wall), at which the ADC controls a middle point of the vehicle. The autonomous driving task may refer to route control information provided to the mining vehicle, such as a start and end point of the route. The driving task information may be based on an input received at a user interface of the vehicle 10 or the control system 6, for example. The RPF of the vehicle may be configured to define the route points to be followed by the vehicle in order to execute the driving task and bypass the obstacle.

The present features, and the co-operation of the RPF, ODF, and the ADC facilitate to avoid the obstacles by dynamic re-routing performed instantly on-board upon detecting the obstacle. Thus, it may be possible to avoid stopping the vehicle, but the vehicle may continue driving, potentially with reduced speed, while the new route is computed and commissioned. Delays affecting production efficiency may be reduced, for example, since a need for manual intervention and control by the operator may be avoided. The present features enable a major improvement to on-board self-adaptation capabilities of an autonomous mining vehicle.

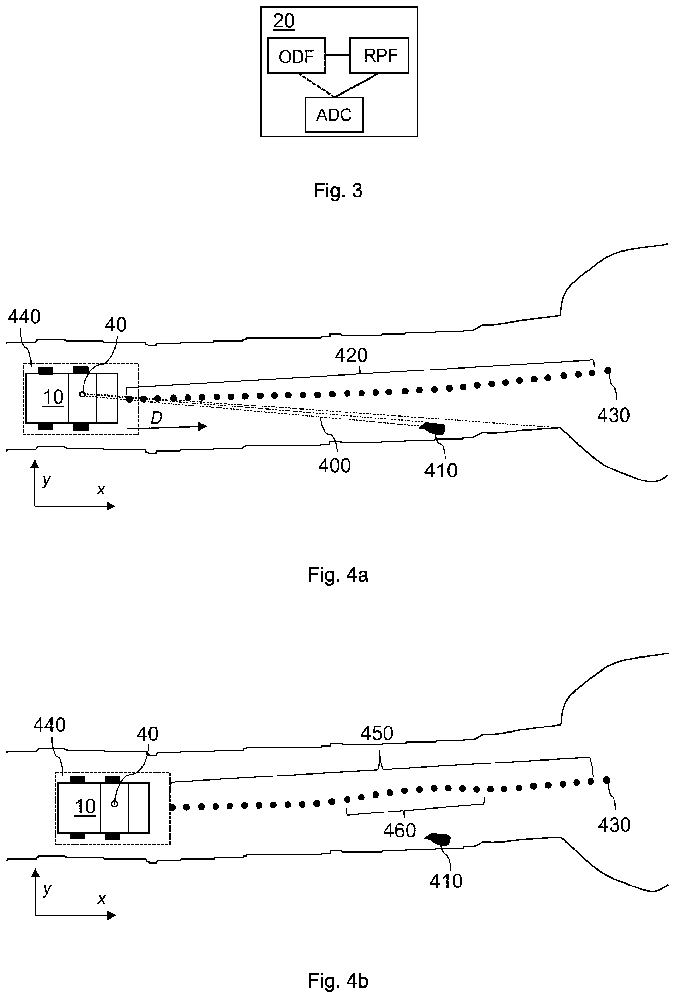

With reference to Figure 3, the mining vehicle 10 may comprise an ODF, an RPF, and an ADC, which may also be referred to as autonomous driving control function. These functions may correspond to respective functions indicated in the method of Figure 2. The control unit 20 may be configured to perform at least some of these functions. Alternatively, multiple control units, for example, a separate control unit for each function, may be applied. It is to be appreciated that there may be also further functions related to autonomous driving, such as a positioning function.

The ODF may be configured to receive the scanning data from the scanner 40 or a scanner application or function providing scanning data based on environment scanning by the scanner. With reference to the example Figure 4a, the scanning data may be based on a set of scanning signals 400 by the scanner. The scanning data may indicate presence of an obstacle 410 in a driving direction D on a first route, the first route comprising a first set of route points 420 to an end point 430.

The ODF may be part of (or operationally connected to) a collision avoidance system (CAS). The ODF may be configured to perform collision examination based on scanning data received from at least scanner 40. In another embodiment, the CAS is configured to perform the collision examination based on an indication of the detected obstacle from the ODF, and control further actions based on the collision examination. The scanning data may be from a plurality of scanners. For example, one scanner may cover a rear portion of the vehicle and another scanner may cover a front section of the vehicle by directional beams. The ODF or the CAS may be configured to control or cause stopping of the mining vehicle in response to detecting an object as an obstacle in the area.

The ODF may be configured to process the scanning data, which may be indicative of distances to tunnel portions and further obstacles, or positions thereof, to detect obstacles in a detection area ahead in the driving direction D of the vehicle. To detect the obstacles, the scanning data may be processed in block 200 or already before block 200. The processing may be based on obstacle detection control parameters, such as control parameters controlling defining detection area and/or safety area around the vehicle.

The apparatus, such as the ODF or the CAS, may be configured to apply one or more obstacle detection or safety areas around the vehicle. For example, at least one safety area or envelope 440 may be defined at least on sides of the vehicle 10.

The ODF/CAS may be configured to determine, based on the positions of at least some of the route points 420, obstacle detection parameters, and the determined position of the obstacle 410, if the obstacle will fall into the safety area when the vehicle follows the route. If yes, block 220 may be entered. If not, the ODF may continue processing new scanning data. Alternatively, the processing may precede block 200, and block 200 may refer to detecting an obstacle to be avoided. In the latter embodiment, already the position of the obstacle may be determined (instead of block 210) prior to block 200.

In an example embodiment, the apparatus is configured to apply a warning area and a collision area or envelope. If the obstacle is detected within the warning area, a warning may be issued, and speed of the vehicle may be reduced, for example. If the obstacle is detected within the collision area, the vehicle will hit or be too close to the obstacle and further safety action is required. Instead of causing the mining vehicle to merely stop, block 220 may now be entered to try to bypass the obstacle.

The ODF/CAS may be configured to analyze severity or class of the obstacle for determining if the obstacle needs to be avoided or bypassed. This may be performed upon detecting an obstacle that will fall into a safety area of the vehicle. The analysis may be a further block between blocks 210 and 220. For example, the ODF/CAS may be configured to define a vertical z direction size or height of the obstacle and compare that to an associated threshold value parameter of the vehicle. If the threshold value is exceeded, the obstacle is classified as an obstacle to be avoided (for the vehicle in question). If the obstacle is classified as an obstacle to be avoided, block 220 may be entered. For example, the ODF may be configured to classify a LIDAR measurement set to represent an obstacle to be avoided if there are measurement(s) above a threshold value, such as 30 cm, from a floor level defined in relation to the mining vehicle.

The apparatus, such as the control unit 20 and further the ADC, may be configured to control, in response to detecting 200 the obstacle, reduction of speed of the mining vehicle. For example, the ODF may be configured to transmit an indication of the obstacle or a speed reduction request to the ADC in response to block 200 (and detecting that the obstacle is to be avoided). In response to such indication or request, the ADC may be configured to reduce the speed to a predefined target speed. This enables to further reduce a risk of the mining vehicle hitting the obstacle before the second route has been taken into use. Reducing speed gives time for the apparatus to prepare and commission the second route, thereby avoiding stopping of the vehicle. This is very substantial advantage for heavy mining vehicles, particularly at an uphill, such as a ramp. The apparatus may be configured to dynamically define speed to avoid stopping the mining vehicle before the obstacle, in some embodiments before the expected position, and starting to drive along the second route. For example, the ODF may be configured to define the speed (so as to avoid stopping) on the basis of determined distance of the vehicle to the obstacle (or the potentially already defined expected position) and expected time to define and commission the second route.

The apparatus may be configured to increase the speed after block 250, when controlling the mining vehicle to drive along the second route by the ADC. For example, the control unit 20 may be configured to control the mining vehicle to target speed defined for a route portion currently driven by the vehicle.

The position of the obstacle determined in block 210 may comprise a position in a worksite reference system such as the global coordinate system. The ODF may be configured to determine 3D position information of the obstacle. The ODF may be configured to determine a position of the obstacle in relation to the scanner 40. The position of the scanner 40 may be determined on the basis of environment scanning, as indicated above. The position of the obstacle in the global coordinate system may then be determined on the basis of the position of the scanner. This may be determined based on measured distance and direction of the obstacle from the scanner.

In some example embodiments, the ADC is configured to control navigation of the vehicle along the route based on route points provided by the RPF. The ADC may be configured to define steering control signals to other units or actuators of the mining vehicle based on position information of the route points, such as x and y coordinates in the global coordinate system. Thus, the ADC may define and provide control signals after block 260 so that the mining vehicle autonomously drives along the route points of the second route as to avoid obstacles during autonomous driving towards the end point as the destination of the vehicle. The second route may comprise or be otherwise associated with further parameters, on the basis of which the ADC may control the autonomous driving, such as target speed information.

Figure 4b illustrates the vehicle after the second route, with a second set of route points 450, has been successfully generated at block 240. At least some of the route points of the set 450 are positioned such that the vehicle will pass the obstacle 410 without the obstacle falling into the safety zone 440.

It will be appreciated that there are a number of implementation options for generating the route and defining the route points in block 240, some example embodiments being illustrated below. The second route may be a new route, defined in block 240 further based on the initial route end point position information. The RPF may thus be configured to generate the second route in block 240 to completely replace the first route. The RPF may be configured to compute route points of the second set from the expected position of the vehicle to the end point of the first route.

In another embodiment, a partial route re-generation is performed in block 240. The second set of route points may comprise new route points 460 replacing route points of the first set of route points in proximity to the obstacle. The proximity to the obstacle may refer to the new route points (or replaced route points) being within a pre-determined distance from the obstacle, for example. The apparatus may be configured to generate 240 route points in an area within a pre-determined distance from the position of the obstacle. In another example, a predetermined number of route points may be generated in block 240. The apparatus, such as the RPF may thus be configured to:
- define, based on the position of the obstacle and vehicle dimensions information, route points in the first set of route points unavailable for the mining vehicle, and affected by the detected obstacle, and
- determine the second set of route points to replace the route points defined as being unavailable for the mining vehicle.

The apparatus may be configured to define unavailable route points based on positions of route points of the first set, and their distance to the position of the obstacle 410. Route points of the first route that are within the pre-determined distance from the obstacle may be omitted or removed as unavailable route points. The RPF may be configured to generate 240 the route points further on the basis of vehicle property parameter data. For example, the vehicle property parameters may comprise vehicle dimensions parameter data indicative of at least dimensions of the vehicle and/or safety parameters, such as a size of the safety or collision area required at sides of the vehicle. The RPF may be configured to generate 240 the route points at a predefined interval, for example 0.5 m.

Based on the vehicle property parameter data, the RPF may be configured to determine positions of the route points such that they allow adequate safety margin between a side of the vehicle and the obstacle, and also between another side of the vehicle and tunnel wall (or an obstacle) at the other side. If no such route points are found, the RPF may be configured to indicate this to the ADC and/or on a user interface to notify the operator. The ADC may be configured to control stopping of the vehicle in response to such indication. The ADC or the RPF may be configured to indicate interruption of the driving task and stopping of the vehicle to an operator via a UI, for example, a UI of the control system. The UI may be provided with further information of the detected obstacle, for example, a 2D or 3D UI view indicating the position and size of the obstacle in the worksite model.

The RPF may thus be configured to determine the second route (which may in some embodiments refer to (second) path) from the expected position as a starting point to the initial end point. For a given route, the RPF obtains the input required in block 240 and may be configured to determine available routes or paths from the starting location to reach the end point location. The RPF may be configured to generate one or more available reference lines, to represent the available route(s) from the starting location to reach the end point location (i.a. by bypassing the obstacle detected in block 200). The reference line may refer to an ideal route or path without interference from other objects, such as other vehicles or other obstacles.

If there are multiple available route options, the RPF, or a further module, such as a decision module, selects one of the route options as the second route on the basis of route selection parameter information, such as driving or traffic status information, driving performance optimization parameters, etc. The RPF may be configured to determine or adapt the second set(s) of route points based on the selected route option or the reference line. The ADC may be configured to steer the mining vehicle to exactly or closely follow the reference line of the (selected) second route (as defined by the second set of route points), or steer to the route points in case of no reference line is defined. The ADC may be configured to determine driving parameters, such as speed and/or turning angle), for one or more of the second route points. Each route point or a segment of route points may be associated with a target speed, on the basis of which the ADC controls traction of the vehicle 10. For example, route points 460 in proximity to the obstacle 410 may be assigned with lower speed than other route points of the route, due to the safety zone 440 being closer to the wall.

The expected position being approached by the mining vehicle may comprise a future expected position of the mining vehicle. The RPF may be configured to select the expected position as starting point of the second route computation in block 240. The apparatus, in some embodiments the ADC, may be configured to estimate 220 the expected position for the second route generation in response to block 200. For example, the ODF may be configured to transmit an indication of the obstacle to be avoided or a stopping or speed reduction request to the ADC, triggering the ADC to estimate the expected position.

In some embodiments, the expected position is an expected stopping position of the mining vehicle. The apparatus, in some embodiments the ADC, may be configured to estimate, in response to detecting the obstacle, an expected stopping position of the mining vehicle due to the object on the basis of current position of the vehicle, current speed of the mining vehicle, and the obstacle position. The estimation may apply further (stopping distance affecting) information as input(s) to define the distance required for stopping and/or the stopping position in relation to the worksite model. For example, such further information may comprise vehicle deceleration parameters and/or route properties based on the worksite model. The ADC may be configured to transmit the expected stopping position to the RPF in block 240. The second route may thus start from the stopping position, and the ADC may change to use the (first) route points of the second set when approaching the stopping position. By utilizing the expected stopping position and generating the second route before this position, vehicle stopping may be avoided, enabling energy consumption saving and improved hauling efficiency. When the expected stopping position is estimated, the apparatus may control the vehicle to reduce speed, generate the second route while the vehicle is driving (instead of only after stopping), and change to dynamically use the second route when approaching the expected stopping position, without stopping the vehicle.

The expected position may be, instead of the expected stopping position, another position selected at an adequate distance before the obstacle, such that the mining vehicle avoids stopping (or risking hitting the obstacle). For example, the expected position could be defined as a position at which the vehicle would have to start emergency breaking to avoid hitting the obstacle, if possible.

In some embodiments, the worksite model in block 240 comprises point cloud data, which may be generated on the basis of scanning the environment by a 3D scanner. In another embodiment, the worksite model is a 2D model, which may be generated by a 2D scanner. At least 2D positions of the route points are defined in block 240, depending on if the ADC is configured to control autonomous driving based on 2D or 3D route point inputs. It is to be noted that if 2D (horizontal plane or x and y direction) coordinates are defined for the route points, vertical direction (z) position information may be associated for route points, on a tunnel level, for example.

The apparatus, such as the control unit 20, may be configured to update the worksite model on the basis of the scanning data from the scanner 40. The apparatus may be configured to update the worksite model to include information indicative of the position of the obstacle. This may be a further block after block 210, in some embodiment before block 240. The apparatus may comprise a further worksite model processing function (MPF) configured to update the model based on obstacle information from the ODF. The provision of the position to the RPF may comprise providing the updated worksite model to the RPF, for example, by the MPF. Block 240 may comprise generating the second route on the basis of the updated worksite model.

The vehicle 10 may comprise a simultaneous localization and mapping (SLAM) unit. Such a unit is configured to both position the vehicle and (augment) map the environment, such as the geographical features of the environment, based on (2D or 3D) scanning information while the vehicle is driving, for example, in an automatic mode. The SLAM unit may be configured to update the worksite model based on the detected obstacle.

The apparatus may be configured to apply a drivability map, which may also be referred to as a traversability map, as the worksite model. The drivability map comprises drivability data indicative of drivability of a vehicle at a set of locations in the tunnel. The drivability map is based on a sub-set of points of a 3D worksite model. The drivability map, which may also be referred to as a drivability model, comprises a plurality of points augmented with drivability data. The RPF may be configured to generate 240 the second route for the vehicle on the basis of the drivability map. The RPF may be configured to update the drivability map to include information on the detected obstacle.

In some embodiments, the worksite model comprises or is based on a floor model generated on the basis of a 3D worksite model. The term floor model refers generally to a model comprising a set of points indicative of the tunnel floor at least in horizontal plane, for example, 2D or *x, y* coordinates. Such points may also be referred to as floor points. More efficient route or path calculation or location tracking of vehicles may be achieved by a map that only comprises the floor of the mine, with drivability attributes associated with some or all of the floor points.

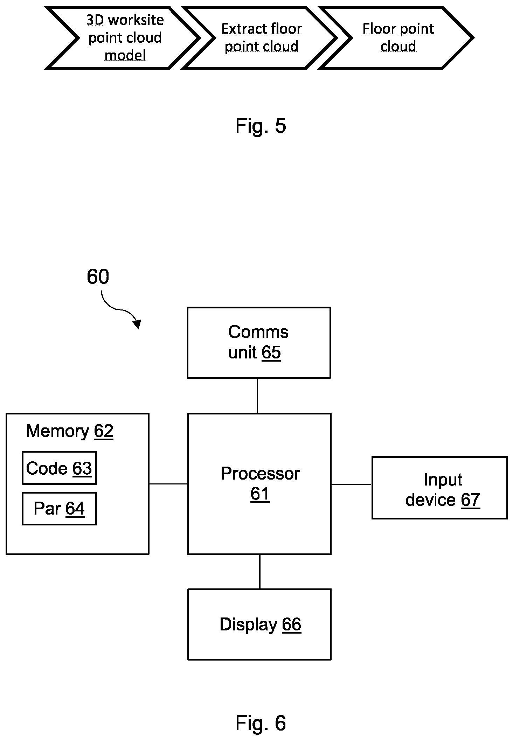

Also with reference to simplified Figure 5, the apparatus may be configured to apply a 3D worksite model as an input to a model processing procedure/algorithm, such as the MPF. The apparatus may be configured to perform a procedure to generate a floor model, the procedure comprising: Floor points among points of the 3D model are identified. This may refer to detecting points on the bottom floor level of the tunnel on the basis of performing one or more evaluation or filtering procedures. The identified floor points are extracted. This may refer to forming a further dataset on the basis of the identified floor points. At least a set of the extracted floor points is applied as a floor model of the tunnel for positioning and/or route planning of a mobile object in the tunnel. For example, the floor model may thus be stored in a database accessible by a positioning unit or application or a route planning unit or application of a worksite server or a mine vehicle. The floor model may be applied as a map of the tunnel and for the route planning, and the floor points may thus be considered as map points.

It is to be appreciated that the floor model does not necessarily define the absolutely lowest bottom level of the underground tunnel, but it may instead be more feasible to extract the floor model and floor points defining accessible areas at some height from the tunnel bottom. As further illustrated in Figure 5, in some embodiments the 3D worksite model comprises 3D point cloud data. The point cloud data may be generated on the basis of scanning the tunnel. The floor model may thus be a point cloud model of the floor comprising a sub-set of points extracted from the 3D worksite point cloud model data for representing the floor of the tunnel.

The drivability map may comprise floor point records of floor points of the floor model, wherein at least some of the floor point records comprise augmented drivability data for the vehicle.

The drivability map, which may be based on the floor model, may be applied by a route planning application for route calculation, in some embodiments in block 240 by the RPF. The application may be configured to calculate a route/path on the basis of the floor model, along the floor defined by the floor points. A simplified floor model and drivability map is beneficial to route planning algorithms instead of full 3D worksite model, since for example roof may be unnecessary information for route planning. In some embodiments, the drivability map is applied by a navigation application, such as the ADC, controlling the autonomously operating mining vehicle 10. The navigation application may be configured to apply the drivability map for vehicle path definition and/or manoeuvre control along the floor defined by the floor points.

**In** some embodiments, the drivability data comprises vehicle specific drivability data, specific to an automated or semi-automated vehicle or vehicle type. The drivability data may be generated based on vehicle property data, which may be indicative of dimensions of the vehicle or the type of the vehicle. Appropriate vehicle property data may be retrieved from a memory or another device on the basis of vehicle or vehicle type identifier received for drivability map generation and/or route planning. For example, load&haul devices of a given series or product family may have particular common dimensions, which are indicated in associated vehicle property data and used to generate the drivability data and/or route information for these vehicles.

The drivability map may indicate points in the sub-set of points of the worksite model traversable by the vehicle or the vehicle type. For example, the drivability map may comprise a sub-set of points, such as floor points, drivable by the vehicle or vehicle type, or an indication of drivability (drivable or non-drivable) for a vehicle or vehicle type may be included in at least some points of the drivability map.

**In** some embodiments, height of the detected obstacle is included in the drivability data. In response to the height of the obstacle exceeding an obstacle height threshold, which may be vehicle or vehicle type specific, the apparatus may be configured to include an indication of the height of the local obstacle and/or an indication of non-drivability in the drivability map and/or floor model. The apparatus may be configured to apply the indication in the route generation 240, for example, the respective point may be omitted from available route options or availability of the point may be determined based on the height indication.

As an example, consider a vehicle that has width W of, for example, 2 meters and has a ground clearance value G, for example, 20 centimeters. The apparatus may be configured to define, for route planning, a subset of the floor model where this vehicle can drive without a risk of hitting obstacles. The subset can be found from the floor model augmented with the local obstacle height h. The apparatus may be configured to define, for every point *p* in the floor model, points at a radius of *W*/*2* based on the width *W* of the vehicle in question. The apparatus may be configured to, if any of the points in the radius has an obstacle height h greater than the ground clearance G, assign such point zero for drivability by this vehicle. If none of the points has an obstacle height higher than G, the apparatus may be configured to assign true or one for drivability of the point. The result may be a binary map indicating drivability of the vehicle.

The information generated based on the height of the obstacle can be used to extract a subset of the floor model, such as a floor mesh, for route generation. When a route is calculated along the graph formed by the edges of this smaller floor mesh, the route will automatically be at a sufficient distance from walls and objects and obstacle free. Using such traveler specific maps, a different route can be given to for example narrow-vein vehicles which can drive through narrow passages. A large vehicle on the other hand requires a certain tunnel width.

In some embodiments, the update of the worksite model triggers automatic update of the floor model and possible further associated models, such as a surface mesh model, to match the updated model. The apparatus may be configured to update a sub-set of points of the floor model and the drivability map (if separate from the floor model), in response to detecting update of the worksite model. In some embodiments, the apparatus is configured to include information of the detected obstacle into the drivability map. Furthermore, some of the drivability data may be dynamic and repetitively updated. For example, obstacles may be mobile, and obstacle-related drivability data may be repetitively updated.

An electronic device comprising electronic circuitries may be an apparatus for realizing at least some embodiments illustrated above, such as the method illustrated in connection with Figure 2. The apparatus may be comprised in at least one computing device connected to or integrated into a control system of the mining vehicle. Such control system may be an intelligent on-board control system controlling operation of various sub-systems of the mining vehicle, such as a hydraulic system, a motor, a rock drill, etc. Such control systems are often distributed and include many independent modules connected by a bus system of controller area network (CAN) nodes, for example.

Figure 6 illustrates a simplified example apparatus capable of supporting at least some embodiments of the present invention. Illustrated is a device 60, which may be configured to carry out at least some of the embodiments relating to the obstacle avoidance, mining vehicle route planning, and autonomous driving control related operations illustrated above. In some embodiments, the device 60 comprises or implements the control unit 20.

Comprised in the device 60 is a processor 61, which may comprise, for example, a single- or multi-core processor. The processor 61 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 60 may comprise memory 62. The memory may comprise random-access memory and/or permanent memory. The memory may be at least in part accessible to the processor 61. The memory may be at least in part comprised in the processor 61. The memory may be at least in part external to the device 60 but accessible to the device. The memory 62 may be means for storing information, such as parameters 64 affecting operations of the device. The parameter information in particular may comprise parameter information affecting, for example route adaptation and related features, such as threshold values.

The memory 62 may be a non-transitory computer readable medium comprising computer program code 63 including computer instructions that the processor 61 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated method steps in the device.

The device 60 may comprise a communications unit 65 comprising a transmitter and/or a receiver. The transmitter and the receiver may be configured to transmit and receive, respectively, i.a. data and control commands within or outside the mining vehicle. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, and/or Ethernet standards, for example. The device 60 may comprise a near-field communication, NFC, transceiver. The NFC transceiver may support at least one NFC technology, such as NFC, Bluetooth, or similar technologies.

The device 60 may comprise or be connected to a UI, such as a UI of the control unit 20 of the vehicle 10. The UI may comprise at least one of a display 66, a speaker, an input device 67 such as a keyboard, a joystick, a touchscreen, and/or a microphone. The UI may be configured to display views on the basis of above illustrated embodiments. A user may operate the device and control at least some of above illustrated features. In some embodiments, the user may control the device and the vehicle 10 via the UI, for example to manually drive the vehicle, change operation mode to and from autonomous driving, change display views, modify parameters 64, in response to user authentication and adequate rights associated with the user, etc.

The device 60 may further comprise and/or be connected to further units, devices and systems, such as one or more sensor devices sensing environment of the device 60 and/or sensor devices detecting position of a joint.

The processor 61, the memory 62, the communications unit 65 and the UI may be interconnected by electrical leads internal to the device 60 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

The apparatus, such as the device 60, the mining vehicle 10, or the control unit 20, may be configured at least to: detect, by an obstacle detection function of an underground mining vehicle performing an autonomous driving task along a first route comprising a first set of route points, an obstacle on the basis of scanning by a scanner of the mining vehicle, determine a position of the obstacle, determine, in response to detecting the obstacle, an expected position being approached by the vehicle before the obstacle, in order to start a new route for the vehicle to an end point of the first route, provide the expected position being approached by the vehicle and the position of the obstacle to a route planning function, generating, by the route planning function, a second route comprising a second set of route points for the mining vehicle to bypass the obstacle, on the basis of the expected position being approached by the vehicle, the position of the obstacle, and a worksite model indicative of limitations for route generation, provide the second route to an autonomous driving controller of the mining vehicle, and control, by the autonomous driving controller, the mining vehicle to drive autonomously along the second route.

The apparatus may be the mining vehicle or included in the mining vehicle.

The apparatus may be configured to estimate, as the expected position in response to detecting the obstacle, an expected stopping position of the mining vehicle on the basis of speed of the mining vehicle, and transmit the expected stopping position as the expected position from the autonomous driving controller to the route planning function.

The apparatus may be configured to determine three-dimensional position information of the obstacle in a worksite reference system on the basis of a position of the scanner determined on the basis of three-dimensional environment scanning.

The apparatus may be configured to update the worksite model to include information indicative of the position of the obstacle, and generate the second route on the basis of the updated worksite model.

The apparatus may be configured to generate the second route on the basis of a traversability or drivability map, wherein the traversability or drivability map comprises a sub-set of points of a three-dimensional worksite model and is indicative of obstacles.

The apparatus may be configured to examine if the detected obstacle will be in a safety area of the mining vehicle when the mining vehicle drives to further route points of the first set of route points, and in response to detecting that the detected obstacle will be in the safety area, cause provision of the position of the obstacle to the route planning function to generate the second route.

The apparatus may be configured to control, in response to detecting the obstacle, reduction of speed of the mining vehicle to avoid stopping the mining vehicle before the expected position and starting to drive along the second route.

The apparatus may be configured to control an increase of the speed when controlling the mining vehicle to drive along the second route.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention as defined in the claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for controlling a mining vehicle configured to store a worksite model, the apparatus comprising at least one processor and at least one memory including computer program code, the at least one memory and the computer program code configured to, with the at least one processor, cause the apparatus at least to perform:
- detect (200), by an obstacle detection function of an underground mining vehicle (10) performing an autonomous driving task along a first route comprising a first set of route points, an obstacle on the basis of scanning by a scanner (40) of the mining vehicle,
- determine (210) a position of the obstacle,
- determine (220), by an autonomous driving controller, in response to detecting the obstacle, an expected stopping position being approached by the vehicle before the obstacle on the basis of speed of the mining vehicle, in order to start a new route for the vehicle to an end point of the first route,
- provide (230) the expected stopping position being approached by the vehicle and the position of the obstacle from the autonomous driving controller to a route planning function,
- generate (240), by the route planning function while continuing driving, a second route starting from the expected stopping position, the second route comprising a second set of route points for the mining vehicle to bypass the obstacle, on the basis of the expected stopping position being approached by the vehicle, the position of the obstacle, and the worksite model indicative of limitations for route generation,
- provide (250) the second route to the autonomous driving controller of the mining vehicle, and
- control (260), by the autonomous driving controller, the mining vehicle to drive autonomously along the second route.

2. The apparatus of any preceding claim, wherein the at least one memory and the computer program code are configured to, with the at least one processor, cause the apparatus to determine three-dimensional position information of the obstacle in a worksite reference system on the basis of a position of the scanner determined on the basis of three-dimensional environment scanning.

3. The apparatus of any preceding claim, wherein the at least one memory and the computer program code are configured to, with the at least one processor, cause the apparatus to:
- update the worksite model to include information indicative of the position of the obstacle, and
- generate the second route on the basis of the updated worksite model.

4. The apparatus of any preceding claim, wherein the at least one memory and the computer program code are configured to, with the at least one processor, cause the apparatus to generate the second route on the basis of a traversability or drivability map, wherein the traversability or drivability map comprises a sub-set of points of a three-dimensional worksite model and is indicative of obstacles.

5. The apparatus of any preceding claim, wherein the at least one memory and the computer program code are configured to, with the at least one processor, cause the apparatus to
- examine if the detected obstacle will be in a safety area of the mining vehicle when the mining vehicle drives to further route points of the first set of route points, and
- in response to detecting that the detected obstacle will be in the safety area, provide the position of the obstacle to the route planning function to generate the second route.

6. The apparatus of any preceding claim, wherein the at least one memory and the computer program code are configured to, with the at least one processor, cause the apparatus to control, in response to detecting the obstacle, reduction of speed of the mining vehicle to avoid stopping the mining vehicle before the expected stopping position and starting to drive along the second route.

7. The apparatus of any preceding claim, wherein the at least one memory and the computer program code are configured to, with the at least one processor, cause the apparatus to control an increase of the speed when controlling the mining vehicle to drive along the second route.

8. A mining vehicle (10), comprising the apparatus of any preceding claim.

9. A method for controlling autonomous driving of a mining vehicle configured to store a worksite model, the method comprising:
- detecting (200), by an obstacle detection function of an underground mining vehicle (10) performing an autonomous driving task along a first route comprising a first set of route points, an obstacle on the basis of scanning by a scanner (40) of the mining vehicle,
- determining (210) a position of the obstacle,
- determining (220), by an autonomous driving controller, in response to detecting the obstacle, an expected stopping position being approached by the vehicle before the obstacle on the basis of speed of the mining vehicle, in order to start a new route for the vehicle to an end point of the first route,
- providing (230) the expected stopping position being approached by the vehicle and the position of the obstacle from the autonomous driving controller to a route planning function,
- generating (240), by the route planning function while continuing driving, a second route starting from the expected stopping position, the second route comprising a second set of route points for the mining vehicle to bypass the obstacle, on the basis of the expected stopping position being approached by the vehicle, the position of the obstacle, and the worksite model indicative of limitations for route generation,
- providing (250) the second route to the autonomous driving controller of the mining vehicle, and
- controlling (260), by the autonomous driving controller, the mining vehicle to drive autonomously along the second route.

10. The method of claim 9, further comprising:
- determining three-dimensional position information of the obstacle in a worksite reference system on the basis of a position of the scanner determined on the basis of three-dimensional environment scanning,
- updating the worksite model to include information indicative of the position of the obstacle, and
- generating the second route on the basis of the updated worksite model.

11. The method of any one of claims 9 to 10, wherein the second route is generated (240) on the basis of a traversability or drivability map, wherein the traversability or drivability map comprises a sub-set of points of a three-dimensional worksite model and is indicative of obstacles.

12. The method of any one of claims 9 to **11,** further comprising controlling, in response to detecting the obstacle, reduction of speed of the mining vehicle to avoid stopping the mining vehicle before the expected stopping position and starting to drive along the second route.

13. A computer program comprising code for, when executed in a data processing apparatus, to cause a method in accordance with any one of claims 9 to 12 to be performed.

## Patentansprüche

1. Einrichtung zur Steuerung eines Bergbaufahrzeugs, die konfiguriert ist, um ein Baustellenmodells zu speichern, wobei die Einrichtung mindestens einen Prozessor und mindestens einen Speicher umfasst, der einen Computerprogrammcode beinhaltet, wobei der mindestens eine Speicher und der Computerprogrammcode konfiguriert sind, um mit dem mindestens einen Prozessor die Einrichtung zu veranlassen, mindestens Folgendes durchzuführen:
- durch eine Hinderniserkennungsfunktion eines Untertage-Bergbaufahrzeugs (10), die eine autonome Fahraufgabe entlang einer ersten Route durchführt, die einen ersten Satz von Routenpunkten umfasst, ein Hindernis basierend auf Scannen durch einen Scanner (40) des Bergbaufahrzeugs zu erkennen (200),
- eine Position des Hindernisses zu bestimmen (210),
- durch eine autonome Fahrsteuereinheit als Reaktion auf Erkennen des Hindernisses eine erwartete Halteposition zu bestimmen (220), der sich das Fahrzeug vor dem Hindernis basierend auf der Geschwindigkeit des Bergbaufahrzeugs annähert, um eine neue Route für das Fahrzeug zu einem Endpunkt der ersten Route zu starten,
- die erwartete Halteposition, der sich das Fahrzeug annähert, und die Position des Hindernisses aus der autonomen Fahrsteuereinheit für eine Routenplanungsfunktion bereitzustellen (230),
- durch die Routenplanungsfunktion bei fortgesetzter Fahrt eine zweite Route, die von der erwarteten Halteposition startet, die zweite Route einen zweiten Satz von Routenpunkten für das Bergbaufahrzeug beinhaltet, um das Hindernis zu umgehen, basierend auf der erwarteten Halteposition zu erzeugen (240), der sich das Fahrzeug annähert, wobei die Position des Hindernisses, und das Abbaustättenmodell Begrenzungen zur Routenerzeugung angibt,
- die zweite Route der autonomen Fahrsteuereinheit des Bergbaufahrzeugs bereitzustellen (250), und
- durch die autonome Fahrsteuereinheit das Bergbaufahrzeug zu steuern (260), um autonom entlang der zweiten Route zu fahren.

2. Einrichtung nach einem vorstehenden Anspruch, wobei der mindestens eine Speicher und der Computerprogrammcode konfiguriert sind, um **mit** dem mindestens einen Prozessor die Einrichtung zu veranlassen, dreidimensionale Positionsinformationen des Hindernisses in einem Abbaustätten-Referenzsystem basierend auf einer Position des Scanners zu bestimmen, die basierend auf einer dreidimensionalen Umgebung bestimmt wird.

3. Einrichtung nach einem vorstehenden Anspruch, wobei der mindestens eine Speicher und der Computerprogrammcode konfiguriert sind, um mit dem mindestens einen Prozessor die Einrichtung zu veranlassen:
- das Abbaustättenmodell zu aktualisieren, um Informationen zu beinhalten, welche die Position des Hindernisses angeben, und
- die zweite Route basierend auf dem aktualisierten Abbaustättenmodell zu erzeugen.

4. Einrichtung nach einem vorstehenden Anspruch, wobei der mindestens eine Speicher und der Computerprogrammcode konfiguriert sind, um mit dem mindestens einen Prozessor die Einrichtung zu veranlassen, die zweite Route basierend auf einer Überfahrbarkeits- oder Fahrbarkeitskarte zu erzeugen, wobei die Überfahrbarkeits- oder Fahrbarkeitskarte eine Teilmenge von Punkten eines dreidimensionalen Abbaustättenmodells umfasst und Hindernisse angibt.

5. Einrichtung nach einem vorstehenden Anspruch, wobei der mindestens eine Speicher und der Computerprogrammcode konfiguriert sind, um mit dem mindestens einen Prozessor die Einrichtung zu veranlassen,
- zu prüfen, ob sich das erkannte Hindernis in einem Sicherheitsbereich des Bergbaufahrzeugs befindet, wenn das Bergbaufahrzeug zu weiteren Routenpunkten des ersten Satzes von Routenpunkten fährt, und
- als Reaktion auf das Erkennen, dass sich das erkannte Hindernis im Sicherheitsbereich befindet, die Position des Hindernisses der Routenplanungsfunktion bereitzustellen, um die zweite Route zu erzeugen.

6. Einrichtung nach einem vorstehenden Anspruch, wobei der mindestens eine Speicher und der Computerprogrammcode konfiguriert sind, um mit dem mindestens einen Prozessor die Einrichtung zu veranlassen, als Reaktion auf das Erkennen des Hindernisses eine Geschwindigkeitssenkung des Bergbaufahrzeugs zu steuern, um ein Anhalten des Bergbaufahrzeugs vor der erwarteten Halteposition zu vermeiden und stattdessen die Fahrt entlang der zweiten Route zu starten.

7. Einrichtung nach einem vorstehenden Anspruch, wobei der mindestens eine Speicher und der Computerprogrammcode konfiguriert sind, um **mit** dem mindestens einen Prozessor die Einrichtung zu veranlassen, eine Erhöhung der Geschwindigkeit zu steuern, wenn das Bergbaufahrzeug entlang der zweiten Route fährt.

8. Bergbaufahrzeug (10), das die Einrichtung nach einem vorstehenden Anspruch umfasst.

9. Verfahren zum Steuern von autonomem Fahren eines Bergbaufahrzeugs, das konfiguriert ist, um ein Abbaustättenmodell zu speichern, wobei das Verfahren umfasst:
- Erkennen (200), durch eine Hinderniserkennungsfunktion eines Untertage-Bergbaufahrzeugs (10), die eine autonome Fahraufgabe entlang einer ersten Route durchführt, die einen ersten Satz von Routenpunkten umfasst, eines Hindernisses basierend auf dem Scannen durch einen Scanner (40) des Bergbaufahrzeugs,
- Bestimmen (210) einer Position des Hindernisses,
- Bestimmen (220), durch eine autonome Fahrsteuereinheit als Reaktion auf Erkennen des Hindernisses einer erwarteten Halteposition, der sich das Fahrzeug vor dem Hindernis basierend auf der Geschwindigkeit des Bergbaufahrzeugs annähert, um eine neue Route für das Fahrzeug zu einem Endpunkt der ersten Route zu starten,
- Bereitstellen (230) der erwarteten Halteposition, der sich das Fahrzeug annähert, und die Position des Hindernisses aus der autonomen Fahrsteuereinheit für eine Routenplanungsfunktion,
- Erzeugen (240), durch die Routenplanungsfunktion bei fortgesetzter Fahrt einer zweiten Route, die von der erwarteten Halteposition startet, die zweite Route einen zweiten Satz von Routenpunkten für das Bergbaufahrzeug beinhaltet, um das Hindernis zu umgehen, basierend auf der erwarteten Halteposition, der sich das Fahrzeug annähert, wobei die Position des Hindernisses, und das Abbaustättenmodell Begrenzungen zur Routenerzeugung angibt,
- Bereitstellen (250) der zweiten Route der autonomen Fahrsteuereinheit des Bergbaufahrzeugs, und
- Steuern (260), durch die autonome Fahrsteuereinheit, des Bergbaufahrzeugs, um autonom entlang der zweiten Route zu fahren.

10. Verfahren nach Anspruch 9, weiter umfassend:
- Bestimmen der dreidimensionalen Positionsinformation des Hindernisses in einem Abbaustätten-Referenzsystem basierend auf einer Position des Scanners, die basierend auf einem dreidimensionalen Umgebungsscan bestimmt worden ist,
- Aktualisieren des Abbaustättenmodells, um Informationen zu beinhalten, welche die Position des Hindernisses angeben, und
- Erzeugen der zweiten Route basierend auf dem aktualisierten Abbaustättenmodell.

11. Verfahren nach einem der Ansprüche 9 bis 10, wobei die zweite Route (240) basierend auf einer Überfahrbarkeits- oder Fahrbarkeitskarte erzeugt wird, wobei die Überfahrbarkeits- oder Fahrbarkeitskarte eine Teilmenge von Punkten eines dreidimensionalen Abbaustättenmodells umfasst und Hindernisse angibt.

12. Verfahren nach einem der Ansprüche 9 bis 11, das weiter das Steuern, als Reaktion auf Erkennen des Hindernisses einer Geschwindigkeitssenkung, des Bergbaufahrzeugs umfasst, um ein Anhalten des Bergbaufahrzeugs vor der erwarteten Halteposition zu vermeiden und stattdessen die Fahrt entlang der zweiten Route zu starten.

13. Computerprogramm, das Code umfasst, der, wenn er in einer Datenverarbeitungseinrichtung ausgeführt wird, bewirkt, dass ein Verfahren nach einem der Ansprüche 9 bis 12 durchgeführt wird.

## Revendications

1. Appareil de commande d'un véhicule minier configuré pour stocker un modèle de chantier, l'appareil comprenant au moins un processeur et au moins une mémoire incluant un code de programme informatique, la au moins une mémoire et le code de programme informatique étant configurés, avec le au moins un processeur, pour amener l'appareil au moins à :
- détecter (200), par une fonction de détection d'obstacle d'un véhicule minier souterrain (10) réalisant une tâche de conduite autonome le long d'un premier itinéraire comprenant un premier ensemble de points d'itinéraire, un obstacle sur la base d'un balayage par un scanner (40) du véhicule minier,
- déterminer (210) une position de l'obstacle,
- déterminer (220), par un dispositif de commande de conduite autonome, en réponse à la détection de l'obstacle, une position d'arrêt prévue de laquelle le véhicule s'approche avant l'obstacle en fonction d'une vitesse du véhicule minier, afin de démarrer un nouvel itinéraire pour le véhicule vers un point final du premier itinéraire,
- fournir (230) la position d'arrêt prévue de laquelle le véhicule s'approche et la position de l'obstacle depuis le dispositif de commande de conduite autonome à une fonction de planification d'itinéraire,
- générer (240), par la fonction de planification d'itinéraire tout en continuant à conduire, un second itinéraire partant de la position d'arrêt prévue, le second itinéraire comprenant un second ensemble de points d'itinéraire pour que le véhicule minier contourne l'obstacle, sur la base de la position d'arrêt prévue de laquelle le véhicule s'approche, de la position de l'obstacle et du modèle de chantier indiquant des limitations de génération d'itinéraire,
- fournir (250) le second itinéraire au dispositif de commande de conduite autonome du véhicule minier, et
- commander (260), par le dispositif de commande de conduite autonome, le véhicule minier pour qu'il conduise de manière autonome le long du second itinéraire.

2. Appareil selon une quelconque revendication précédente, dans lequel la au moins une mémoire et le code de programme informatique sont configurés pour, avec le au moins un processeur, amener l'appareil à déterminer des informations de position tridimensionnelle de l'obstacle dans un système de référence de chantier sur la base d'une position du scanner déterminée sur la base d'un balayage d'environnement tridimensionnel.

3. Appareil selon une quelconque revendication précédente, dans lequel la au moins une mémoire et le code de programme informatique sont configurés pour, avec le au moins un processeur, amener l'appareil à :
- mettre à jour le modèle de chantier pour inclure des informations indiquant la position de l'obstacle, et
- générer le second itinéraire sur la base du modèle de chantier mis à jour.

4. Appareil selon une quelconque revendication précédente, dans lequel la au moins une mémoire et le code de programme informatique sont configurés pour, avec le au moins un processeur, amener l'appareil à générer le second itinéraire sur la base d'une carte de praticabilité ou de conductibilité, dans lequel la carte de praticabilité ou de conductibilité comprend un sous-ensemble de points d'un modèle de chantier tridimensionnel et est indicative d'obstacles.

5. Appareil selon une quelconque revendication précédente, dans lequel la au moins une mémoire et le code de programme informatique sont configurés pour, avec le au moins un processeur, amener l'appareil à
- examiner si l'obstacle détecté se trouvera dans une zone de sécurité du véhicule minier lorsque le véhicule minier conduira vers d'autres points d'itinéraire du premier ensemble de points d'itinéraire, et
- en réponse à la détection que l'obstacle détecté se trouvera dans la zone de sécurité, fournir la position de l'obstacle à la fonction de planification d'itinéraire pour générer le second itinéraire.

6. Appareil selon une quelconque revendication précédente, dans lequel la au moins une mémoire et le code de programme informatique sont configurés pour, avec le au moins un processeur, amener l'appareil à commander, en réponse à la détection de l'obstacle, une réduction de vitesse du véhicule minier afin d'éviter l'arrêt du véhicule minier avant la position d'arrêt prévue et de commencer à conduire le long du second itinéraire.

7. Appareil selon une quelconque revendication précédente, dans lequel la au moins une mémoire et le code de programme informatique sont configurés pour, avec le au moins un processeur, amener l'appareil à commander une augmentation de la vitesse lors de la commande du véhicule minier pour conduire le long du second itinéraire.

8. Véhicule minier (10), comprenant l'appareil selon une quelconque revendication précédente.

9. Procédé de commande de conduite autonome d'un véhicule minier configuré pour stocker un modèle de chantier, le procédé comprenant :
- la détection (200), par une fonction de détection d'obstacle d'un véhicule minier souterrain (10) réalisant une tâche de conduite autonome le long d'un premier itinéraire comprenant un premier ensemble de points d'itinéraire, d'un obstacle sur la base d'un balayage par un scanner (40) du véhicule minier,
- la détermination (210) d'une position de l'obstacle,
- la détermination (220), par un dispositif de commande de conduite autonome, en réponse à la détection de l'obstacle, d'une position d'arrêt prévue de laquelle le véhicule s'approche avant l'obstacle en fonction d'une vitesse du véhicule minier, afin de démarrer un nouvel itinéraire pour le véhicule vers un point final du premier itinéraire,
- la fourniture (230) de la position d'arrêt prévue de laquelle le véhicule s'approche et de la position de l'obstacle depuis le dispositif de commande de conduite autonome à une fonction de planification d'itinéraire,
- la génération (240), par la fonction de planification d'itinéraire tout en continuant à conduire, d'un second itinéraire partant de la position d'arrêt prévue, le second itinéraire comprenant un second ensemble de points d'itinéraire pour que le véhicule minier contourne l'obstacle, sur la base de la position d'arrêt prévue de laquelle le véhicule s'approche, de la position de l'obstacle et du modèle de chantier indiquant des limitations de génération d'itinéraire,
- la fourniture (250) du second itinéraire au dispositif de commande de conduite autonome du véhicule minier, et
- la commande (260), par le dispositif de commande de conduite autonome, du véhicule minier pour qu'il conduise de manière autonome le long du second itinéraire.

10. Procédé selon la revendication 9, comprenant en outre :
- la détermination d'informations de position tridimensionnelle de l'obstacle dans un système de référence de chantier sur la base d'une position du scanner déterminée sur la base d'un balayage d'environnement tridimensionnel,
- la mise à jour du modèle de chantier pour inclure des informations indiquant la position de l'obstacle, et
- la génération du second itinéraire sur la base du modèle de chantier mis à jour.

11. Procédé selon l'une quelconque des revendications 9 à 10, dans lequel le second itinéraire est généré (240) sur la base d'une carte de praticabilité ou de conductibilité, dans lequel la carte de praticabilité ou de conductibilité comprend un sous-ensemble de points d'un modèle de chantier tridimensionnel et est indicative d'obstacles.

12. Procédé selon l'une quelconque des revendications 9 à 11, comprenant en outre la commande, en réponse à la détection de l'obstacle, d'une réduction de vitesse du véhicule minier afin d'éviter l'arrêt du véhicule minier avant la position d'arrêt prévue et de commencer à conduire le long du second itinéraire.

13. Programme informatique comprenant un code pour, lorsqu'il est exécuté dans un appareil de traitement de données, amener un procédé selon l'une quelconque des revendications 9 à 12 à être mis en œuvre.
